# EUROPEAN PATENT SPECIFICATION

(11) **EP 3 904 169 B1**
(45) Date of publication and mention of the grant of the patent: **20.09.2023**
(21) Application number: 19903912.4
(22) Date of filing: 27.12.2019
(51) Int. Cl.: B60T 17/00, B01D 53/26

(54) **AIR SUPPLY SYSTEM**
LUFTZUFUHRSYSTEM
SYSTÈME D'ALIMENTATION EN AIR

(30) Priority: 28.12.2018 JP 2018246455
(43) Date of publication of application: 03.11.2021
(73) Proprietor: Nabtesco Automotive Corporation, Tokyo 102-0093 (JP)
(72) Inventor: SUGIO, Takuya, Tokyo 102-0093 (JP)
(74) Representative: Grünecker Patent- und Rechtsanwälte PartG mbB
(86) International application number: PCT/JP2019/051357
(87) International publication number: WO 2020/138391

(56) References cited:
- EP-A1- 1 529 704
- EP-A1- 2 754 594
- DE-A1-102008 056 322
- JP-A- 2006 316 626
- JP-A- 2018 100 057

## Description

### TECHNICAL FIELD

The present invention relates to an air supply system that supplies compressed air to a device.

### BACKGROUND ART

Vehicles such as trucks, buses, and construction machines use compressed air delivered from a compressor to control pneumatic systems such as brakes and suspensions. The compressed air contains liquid impurities such as water, which is contained in the atmosphere, and oil for lubricating the interior of the compressor. When entering inside a pneumatic system, compressed air containing a large amount of water and oil causes rust and swelling of rubber members. This results in an operational defect. For this reason, an air dryer is provided downstream of the compressor to remove impurities such as water and oil from the compressed air.

The air dryer performs a dehumidifying operation to remove oil and water from the compressed air, and a regenerating operation to remove oil and water absorbed by the desiccant and to discharge oil and water to the outside as collected liquid. For example, Patent Document 1 discloses a technique by which an air dryer performs the regenerating operation.

The air supply system disclosed in Patent Document 1 stores air compressed by an air compressor in an air tank. When the air pressure in the air tank is less than or equal to a first pressure, the air supply system drives the air compressor to supply compressed air to the air tank until the air pressure increases and reaches a second pressure. When the air pressure reaches the second pressure, the air supply system stops the supply of compressed air to the air tank by the air compressor, and opens a discharge valve (purge valve). Thereafter, the air supply system maintains the discharge valve in the opened state until the air pressure decreases to a third pressure, thereby performing the regenerating operation, in which the compressed air in the air tank is caused to flow through the air dryer and is discharged to the atmosphere. The air supply system closes the discharge valve when the air pressure in the air tank reaches the third pressure.

### PRIOR ART

DE 10 2008 056322 A1 discloses a control device for controlling a compressed air processing device of a commercial vehicle, comprising a compressor to convey compressed air, which is guided from reservoirs via an air dryer for regenerating the drying agent in the regeneration phase. The regeneration phase is adjusted based on present or future engine efficiency and/or present or future need of compressed air for a vehicle.

Patent Document 1: Japanese Laid-Open Patent Publication No. 2015-229127

### SUMMARY OF THE INVENTION

### Problems that the Invention is to Solve

The air supply system disclosed in Patent Document 1 uses the compressed air in the air tank to perform the regenerating operation of the air dryer.

In recent years, the technique of regenerative supply has been known. In order to reduce the engine load related to driving a compressor, the technique uses rotation of an engine to drive the compressor during a no-load operation of the engine, such as no-fuel injection operation, during which rotation of the engine is not used for traveling. The start condition of the regenerative supply is related to the state of the vehicle. On the other hand, the start condition of the regenerating operation is related to air pressure. Therefore, these start conditions are satisfied at the same time in some cases. If both the start conditions are satisfied, the regenerating operation and the regenerative supply are performed at the same time. In such a case, the compressed air supplied by the regenerative supply would be discharged. This may eliminate the reduction in the engine load. Also, the time for regeneration of the air dryer may fail to reach a predetermined value, resulting in an insufficient regeneration. The air dryer thus may have a regeneration failure. That is, adjustment of the times at which the regenerating operation and the regenerative supply can be improved.

Accordingly, it is an objective of the present invention to provide an air supply system capable of reducing fuel consumption related to driving a compressor.

### Means for Solving the Problems

To achieve the foregoing objective, an air supply system is provided that performs a supplying operation that causes compressed air supplied from a compressor to flow from an upstream side to a downstream side via an air dryer including a filter and a check valve. The air supply system includes a pressure sensor that detects an air pressure on a downstream side of the check valve, and a controller that switches between the supplying operation and a non-supplying operation, and performs a regenerating operation, which regenerates the filter, during the non-supplying operation. The controller stores a supply start value, the supplying operation being started based on a comparison between the supply start value and a detected air pressure detected by the pressure sensor, and a supply stop value, which is greater than the supply start value. The non-supplying operation is started based on a comparison between the supply stop value and the detected air pressure. The controller performs the supplying operation by a regenerative supply when a condition is satisfied. The condition including that the regenerating operation is not being performed, that the detected air pressure is greater than the supply start value and less than the supply stop value, and that an engine that drives the compressor is performing a no-load operation.

In this configuration, during a no-load operation, in which, for example, the vehicle is decelerating and the engine is rotated by rotation of vehicle wheels, the regenerative supply is performed in which the compressor is driven by rotation of the engine to supply compressed air. The regenerative supply is performed prior to supply of compressed air through a normal supplying operation, so as to supplement the supply of compressed air through the normal supplying operation. During the regenerative supply, the engine does not consume fuel to drive the compressor. This improves the fuel economy of the engine. Accordingly, the fuel consumption related to driving the compressor is reduced.

According to one embodiment, the no-load operation of the engine may include a state in which the engine is performing a no-fuel injection operation.

This configuration uses the rotation of the engine to supply air effectively during a no-fuel injection operation of the engine.

According to one embodiment, the controller may continue the regenerative supply for 10 seconds or longer.

With this configuration, when the compressor is switched from a no-load operation to a load operation, there is no period during which compressed air fails to be supplied due to a delay in the supply of compressed air.

According to one embodiment, the condition may further include that the detected air pressure is less than or equal to a predetermined air pressure.

With this configuration, when the compressor is switched from a no-load operation to a load operation, there is unlikely to be a period during which compressed air fails to be supplied due to a delay in the supply of compressed air.

According to one embodiment, the controller does not necessarily need to start the regenerative supply while the regenerating operation is being performed.

This configuration prevents the regenerating operation from being rendered useless because of the regenerative supply. The regeneration performance is not reduced due to interruption of the regenerating operation by the regenerative supply.

According to one embodiment the controller may acquire information indicating that the engine is performing the no-load operation from a controller for a vehicle.

This configuration is capable of acquiring information indicating that the engine is performing a no-load operation from the controller for the vehicle.

### BRIEF DESCRIPTION OF THE DRAWINGS

Fig. 1 is a block diagram schematically showing the configuration of an air supply system according to an embodiment used in an air brake system.
Fig. 2 is a diagram schematically showing the air supply system of the embodiment.
Fig. 3A is a diagram showing an operational mode of the air dryer of the embodiment, illustrating a supplying operation.
Fig. 3B is a diagram showing an operational mode of the air dryer of the embodiment, illustrating a purging operation.
Fig. 3C is a diagram showing an operational mode of the air dryer of the embodiment, illustrating a regenerating operation.
Fig. 4 is a graph showing points in time at which a regenerative operation and the like of the embodiment are performed.
Fig. 5 is a flowchart showing a procedure for performing the regenerative operation of the embodiment.
Fig. 6 is a flowchart showing a procedure for performing the regenerative operation of the embodiment.
Fig. 7 is a flowchart showing a procedure for performing the regenerative operation of the embodiment.
Fig. 8 is a flowchart showing a procedure for performing the regenerative operation of the embodiment.
Fig. 9 is a flowchart showing a procedure for performing the regenerative operation of the embodiment.
Fig. 10 is a flowchart showing a procedure for performing the regenerative operation of the embodiment.
Fig. 11 is a flowchart showing a procedure for performing the regenerative operation of the embodiment.

### MODES FOR CARRYING OUT THE INVENTION

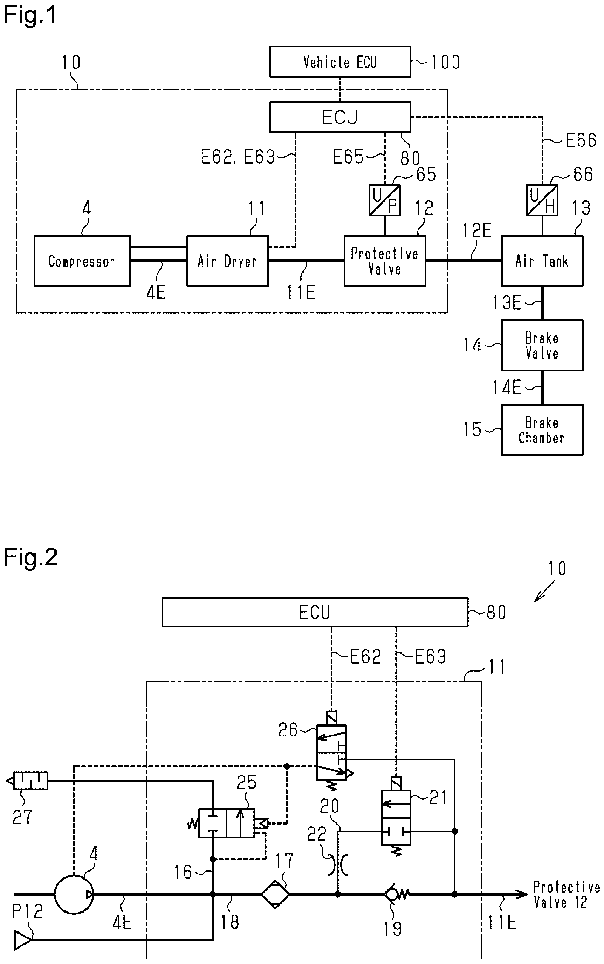

An air supply system according to an embodiment in a pneumatic system will be described with reference to Figs. 1 to 4. The air supply system is mounted on an automobile such as a truck, a bus, or a construction machine.

With reference to Fig. 1, a schematic configuration of the pneumatic system will be described.

The pneumatic system includes a compressor 4, an air dryer 11, a protective valve 12, an air tank 13, a brake valve 14, and a brake chamber 15, which are connected sequentially by air supply paths 4E, 11E, 12E, 13E, and 14E. Among these components, the compressor 4, the air dryer 11, and the protective valve 12 are included in an air supply system 10.

The compressor 4 is driven by a force of the engine (not shown) of the automobile to compress air and supply compressed air to the air supply system 10. The compressor 4 is connected to the air dryer 11 via the air supply path 4E.

In the air dryer 11, the air delivered from the compressor 4 passes through a filter 17 (refer to Fig. 2), so that impurities in the air are trapped, so that the air is cleaned. The thus cleaned air is supplied to the air tank 13 from the air dryer 11 via the air supply path 11E, the protective valve 12 and the air supply path 12E.

The air tank 13 is connected to the brake valve 14, which is operated by a driver, via the air supply path 13E. The brake valve 14 is connected to the brake chamber 15 via the air supply path 14E. Thus, in response to the operation of the brake valve 14, air is supplied to the brake chamber 15, so that a service brake is activated.

The air supply system 10 includes an ECU 80, which serves as a controller. The ECU 80 is electrically connected to the air dryer 11 via wires E62, E63. Also, the ECU 80 is electrically connected to a pressure sensor 65 via a wire E65. The ECU 80 detects an air pressure at the protective valve 12 using the pressure sensor 65. A detected air pressure, which corresponds to the air pressure in the air tank 13, is acquired from the detection signal of the pressure sensor 65. The ECU 80 is connected to a temperature-humidity sensor 66 via a wire E66. The ECU 80 detects the humidity of the compressed air in the air tank 13 using the temperature-humidity sensor 66. Further, the ECU 80 is electrically connected to a vehicle ECU 100 so as to acquire various signals in the vehicle on which the air supply system 10 is mounted.

The ECU 80 includes a computation unit, a volatile storage unit, and a non-volatile storage unit (none of which is shown), and delivers signals specifying actions to the air dryer 11 in accordance with programs stored in the non-volatile storage unit. The ECU 80 includes a timer used to measure periods related to a regenerating operation.

The air supply system 10 will be described with reference to Fig. 2.

The air dryer 11 includes a maintenance port P12. The maintenance port P12 is used to supply air to a section upstream of the filter 17 of the air dryer 11 during maintenance.

The ECU 80 is electrically connected to a regeneration control valve 21 of the air dryer 11 via the wire E63, and is electrically connected to a governor 26 of the air dryer 11 via the wire E62.

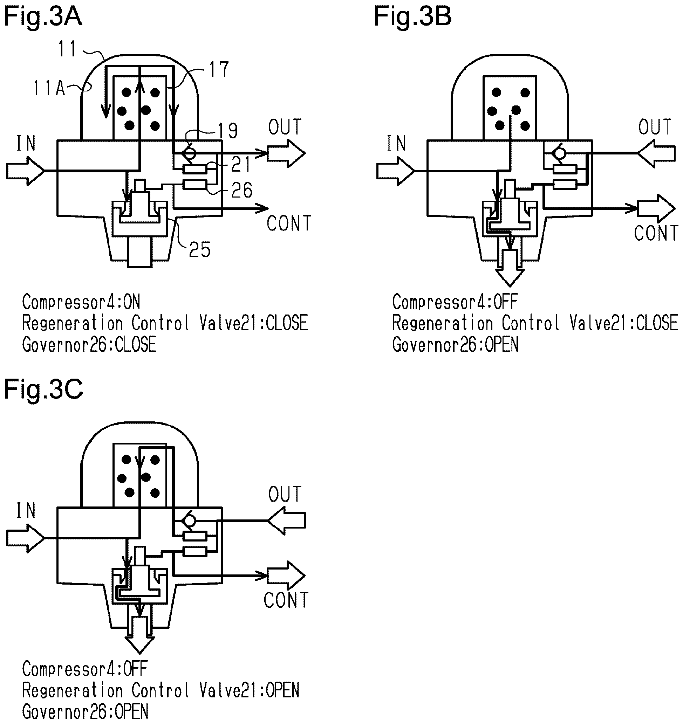

With reference to Figs. 3A to 3C, the air dryer 11 includes the filter 17 in an internal space 11A. The filter 17 is disposed in an air supply passage 18. The air supply passage 18 connects the air supply path 4E, which extends from the compressor 4 on the upstream side, to the air supply path 11E, which is connected to the protective valve 12 on the downstream side.

The filter 17 accommodates a desiccant and includes a filtering unit. The filter 17 causes air to pass through the desiccant so as to remove water contained in the air, thereby drying the air, and removes oil contained in the air using the filtering unit so as to clean the air. The air that has passed through the filter 17 is supplied to the protective valve 12 via a check valve 19, which permits the air from the filter 17 to flow only to the downstream side. Assuming that the filter 17 is disposed on the upstream side, and the protective valve 12 is disposed on the downstream side, the check valve 19 permits air to flow only from the upstream side to the downstream side.

Referring to Fig. 2, a bypass passage 20, which bypasses the check valve 19, is disposed to be parallel with the check valve 19. The regeneration control valve 21 is connected to the bypass passage 20.

The regeneration control valve 21 is an electromagnetic valve controlled by the ECU 80. The ECU 80 controls energization/de-energization (activation/deactivation) of the regeneration control valve 21 via the wire E63, thereby switching the operation of the regeneration control valve 21. In a de-energized state, the regeneration control valve 21 is closed to block the bypass passage 20. In an energized state, the regeneration control valve 21 is open to open the bypass passage 20. For example, the regeneration control valve 21 is activated when the value of the detected air pressure exceeds a supply stop value.

The bypass passage 20 includes an orifice 22 between the regeneration control valve 21 and the filter 17. When the regeneration control valve 21 is energized, the compressed air in the air tank 13 is delivered to the filter 17 through the protective valve 12 and via the bypass passage 20 with the flow rate being regulated by the orifice 22. The compressed air delivered to the filter 17 flows backward from the downstream side to the upstream side through the filter 17. This process is designed to regenerate the filter 17 and is referred to as a regeneration process of an air dryer. At this time, the compressed air in the air tank 13, which has been dried and cleaned, flows backward through the filter 17, thereby removing trapped water and oil from the filter 17. For example, the regeneration control valve 21 is controlled to be open for a predetermined amount of time. The predetermined amount of time is an amount of time that allows the filter 17 to be regenerated, and is set logically, experimentally, or empirically.

A branch passage 16 branches off a section between the compressor 4 and the filter 17. A drain valve 25 is disposed on the branch passage 16, and a drain port 27 is connected to the end of the branch passage 16.

Collected liquid, which contains water and oil removed from the filter 17, is delivered to the drain valve 25 together with compressed air. The drain valve 25 is a pneumatic valve driven by air pressure and is disposed in a section of the branch passage 16 between the filter 17 and the drain port 27. The drain valve 25 is a two-port two-position valve, which changes the position between a closed position and an open position. The drain valve 25 delivers collected liquid to the drain port 27 when in the open position. The collected liquid discharged from the drain port 27 may be recovered by an oil separator (not shown).

The drain valve 25 is controlled by the governor 26. The governor 26 is an electromagnetic valve controlled by the ECU 80. The ECU 80 controls energization/deenergization (activation/deactivation) of the governor 26 via the wire E62, thereby switching the operation of the governor 26. When energized, the governor 26 delivers an unload signal of a predetermined air pressure to the drain valve 25, thereby opening the drain valve 25. When de-energized, the governor 26 does not deliver the unload signal to the drain valve 25, thereby exposing the port of the drain valve 25 to the atmospheric pressure, thereby closing the drain valve 25.

The drain valve 25 is maintained in the closed position when receiving no unload signal from the governor 26. The drain valve 25 is switched to the open position when receiving the unload signal from the governor 26. Further, when the pressure at the input port of the drain valve 25, which is connected to the compressor 4, is increased beyond an upper limit, the drain valve 25 is forcibly switched to the open position.

The compressor 4 performs a load operation to supply compressed air and a no-load operation to supply no compressed air. The governor 26 controls switching between the load operation and the no-load operation of the compressor 4. When energized, the governor 26 delivers an unload signal to the compressor 4 so as to cause the compressor 4 to perform the no-load operation. When de-energized, the governor 26 does not deliver the unload signal to the compressor 4 and exposes the port of the compressor 4 to the atmosphere, so as to cause the compressor 4 to perform the load operation.

The ECU 80 energizes (activates) the governor 26 based on the detected air pressure of the pressure sensor 65, thereby switching the governor 26 to a supply position, at which the governor 26 outputs the unload signal. Also, the ECU 80 de-energizes (deactivates) the governor 26 based on the detected air pressure of the pressure sensor 65, thereby switching the governor 26 to a non-supply position, at which the governor 26 does not output the unload signal.

Referring to Figs. 3A to 3C, a supplying operation, a purging operation, and a regenerating operation of the air dryer 11 will be described. The supplying operation is an operation that supplies compressed air to the air tank 13. The purging operation is an operation in which the compressor is put in a stopped state in order to execute a purging process and the like. The regenerating operation is an operation that performs a regeneration process of the filter 17. The regenerating operation and the purging operation are included in the non-supplying operation.

With reference to Fig. 3A, during the supplying operation, the ECU 80 closes the regeneration control valve 21 and the governor 26 (indicated by CLOSE in the drawing). At this time, the regeneration control valve 21 and the governor 26 do not receive drive signals (power) from the ECU 80. Thus, the governor 26 exposes the ports of the compressor 4 and the drain valve 25, which are located downstream of and connected to the governor 26, to the atmosphere. In the supplying operation, the compressor 4 supplies compressed air (indicated by ON in the drawing). The compressed air supplied to the air dryer 11 (indicated by IN in the drawing) is supplied to the air tank 13 (indicated by OUT in the drawing) via the protective valve 12 after the filter 17 removes water and oil from the compressed air.

With reference to Fig. 3B, during the purging operation, the ECU 80 closes the regeneration control valve 21 and opens the governor 26 (indicated by OPEN in the drawing). At this time, the governor 26 receives a drive signal (power) from the ECU 80 and opens, thereby connecting the ports of the compressor 4 and the drain valve 25, which are located downstream of and connected to the governor 26, to the upstream side (the protective valve 12). In the purging operation, the unload signal from the governor 26 (indicated by CONT in the drawing) puts the compressor 4 in the no-load operation state (indicated by OFF in the drawing). Also, the compressed air in the filter 17 and the air supply passage 18 is discharged from the drain port 27 together with water and oil.

With reference to Fig. 3C, during the regenerating operation, the ECU 80 opens the regeneration control valve 21 and the governor 26. At this time, the regeneration control valve 21 and the governor 26 receive a drive signal (power) from the ECU 80. In the regenerating operation, the unload signal from the governor 26 puts the compressor 4 in the no-load operation state. In the regenerating operation, the regeneration control valve 21 and the drain valve 25 are opened, so that the compressed air in a section on the side of the filter 17 that corresponds to the protective valve 12 flows backward from the downstream side to the upstream side through the filter 17 (the accommodated desiccant). Accordingly, the regeneration process of the filter 17 is performed.

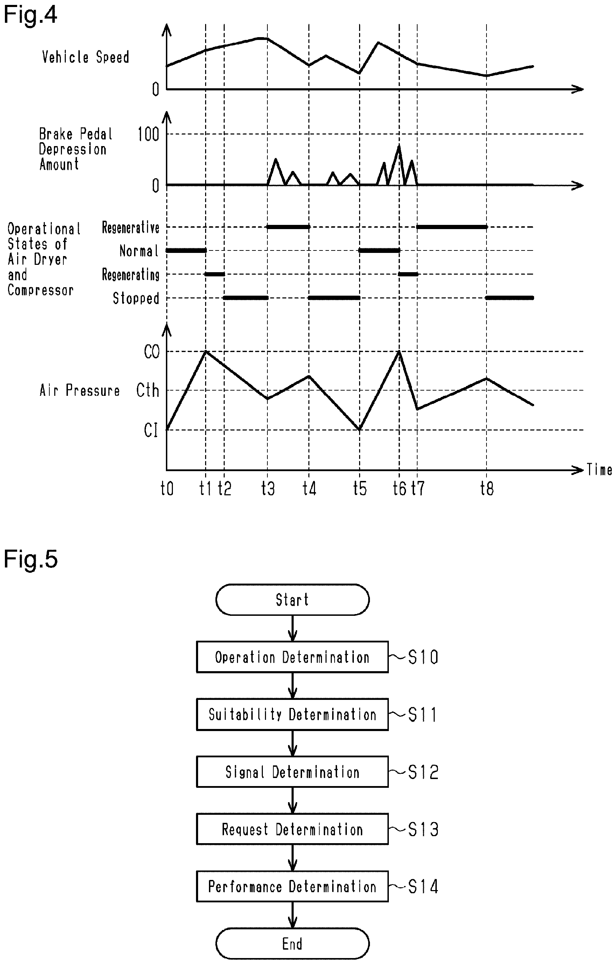

An operation of the air supply system 10 will now be described with reference to Fig. 4.

The ECU 80 stores a supply start value Cl, which corresponds to the air pressure at which the compressor 4 is caused to start supplying air, and a supply stop value CO, which corresponds to the air pressure at which the supply of air by the compressor 4 is stopped. Also, the ECU 80 has a regenerative threshold Cth, which is less than the supply stop value CO and greater than the supply start value Cl. For example, the supply stop value CO, the supply start value Cl, and the regenerative threshold Cth may be stored in the non-volatile storage unit of the ECU 80. The ECU 80 is capable of measuring periods of a regenerative operation using a timer.

In Fig. 4, during a period in which the vehicle speed is decreasing, the engine may be determined to be in a no-load operation such as a no-fuel injection operation. Also, during a period in which the brake pedal depression amount is large, the engine may be determined to be performing a no-load operation such as a no-fuel injection operation. The state of the compressor 4 is related to the operation of the air dryer 11. When the compressor 4 is in a stopped state, the air dryer 11 performs the purging operation. When the compressor 4 is in a regenerating state, the air dryer 11 performs the regenerating operation. When the compressor 4 is in a normal state, the air dryer 11 performs the supplying operation. When the compressor 4 is in a regenerative supplying state, the air dryer 11 performs the supplying operation. Normally, the supplying operation is started on condition that the air pressure is less than or equal to the supply start value Cl. The operation that is started on condition that a predetermined condition is satisfied when the air pressure is greater than the supply start value CI will particularly be referred to as a regenerative operation. The predetermined condition includes that the air dryer 11 is not performing the regenerating operation, that the detected air pressure is less than or equal to the regenerative threshold Cth, which is greater than the supply start value CI and less than the supply stop value CO, and that the engine, which drives the compressor 4, is performing a no-load operation. The engine performing the no-load operation includes a state in which the engine is performing the no-fuel injection operation.

The ECU 80 compares the detected air pressure, which has been detected by the pressure sensor 65, with the supply start value Cl. When the detected air pressure becomes less than or equal to the supply start value CI (a point in time t0), the ECU 80 switches the air dryer 11 to the supplying operation so as to supply compressed air to the air tank 13. This opens the governor 26 of the air dryer 11 and thus stops output of the unload signal. The compressor 4 performs the load operation in response to the stopping of the unload signal. As the supplying operation of the air dryer 11 continues, the detected air pressure of the air tank 13 increases (from the point in time t0 to a point in time t1).

When the detected air pressure becomes greater than or equal to the supply stop value CO (the point in time t1) due to the supply of compressed air, the ECU 80 switches the air dryer 11 to the regenerating operation. This opens the governor 26 of the air dryer 11, so that the unload signal is output. The compressor 4 performs the no-load operation in response to the input of the unload signal. Also, in the air dryer 11, the governor 26 outputs the unload signal to the drain valve 25. The drain valve 25 is opened in response to the input of the unload signal, so that the air in the filter 17 of the air dryer 11 is caused to flow in a regeneration direction. The regeneration direction refers to a direction from the downstream side to the upstream side and is opposite to a supplying direction, which is the direction of the flow of air when the air is cleaned. As a result, for a predetermined amount of time (from the point in time t1 to a point in time t2), impurities trapped by the filter 17 are discharged as collected liquid from the drain valve 25 together with the air flowing in the regeneration direction, so that the filter 17 is regenerated.

When the filter 17 is regenerated in this manner, the compressor 4 is performing the no-load operation in response to the input of the unload signal. The compressed air is therefore not consumed wastefully.

During the regenerating operation, the air pressure decreases in response to compressed air being consumed by the regenerating operation and in the brake chamber 15 (from the point in time t1 to the point in time t2). When the regenerating operation is ended, the ECU 80 switches the air dryer 11 to the purging operation. Accordingly, the compressed air stops flowing to the filter 17, but is consumed in the brake chamber 15. This reduces the air pressure in the air tank 13 (from the point in time t2 to a point in time t3).

In the present embodiment, during the non-supplying operation, the ECU 80 starts the regenerative operation based on the fact that a regenerative operation start condition is satisfied (the point in time t3). The regenerative operation start condition includes that the air dryer 11 is not performing the regenerating operation, that the detected air pressure is less than or equal to the regenerative threshold Cth, and that the engine, which drives the compressor 4, is performing a no-load operation. For example, the vehicle speed is decreasing at the point in time t3, so that the no-load operation of the engine is detected.

The ECU 80 continues the regenerative operation for a predetermined amount of time (from the point in time t3 to a point in time t4). During the predetermined period in which the regenerative operation is continued, the compressor is prevented from receiving a high load by avoiding switching between the load operation and the no-load operation at a short interval. The predetermined amount of time is, for example, 10 seconds. Thus, after the regenerative operation is started, the regenerative operation is continued for a period of the predetermined amount of time even if the engine is switched to the load operation during the period. After continuing the regenerative operation for the predetermined amount of time, the ECU 80 stops the regenerative operation in accordance with the fact that the engine is performing the load operation (the point in time t4).

When the regenerative operation is ended, the ECU 80 switches the air dryer 11 to the purging operation as in the case in which the regenerating operation is ended. Accordingly, the compressed air stops flowing to the filter 17, but is consumed in the brake chamber 15. This reduces the air pressure in the air tank 13 (from the point in time t4 to a point in time t5).

At the point in time t5, the ECU 80 detects that the detected air pressure is less than or equal to the supply start value Cl, and performs the supplying operation (from the point in time t5 to a point in time t6). Also, the ECU 80 stops the supplying operation and starts the regenerating operation in response to the detected air pressure reaching the supply stop value CO (the point in time t6). During the regenerating operation, the air pressure decreases in response to compressed air being consumed by the regenerating operation and in the brake chamber 15 (from the point in time t6 to a point in time t7). During the period from the point in time t6 to the point in time t7, the vehicle speed is decreasing, and the engine is performing the no-load operation. However, the air dryer 11 is performing the regenerating operation. Therefore, the regenerating operation is continued even if the air pressure becomes less than or equal to the regeneration threshold Cth (until the point in time t7).

When the regenerating operation is ended (the point in time t7), the ECU 80 starts the regenerative operation based on the fact that the regenerative operation start condition is satisfied. At this time, the ECU 80 continues the regenerative operation based on the fact that the regenerative operation start condition continues to be satisfied after the duration of the predetermined amount of time. The ECU 80 stops the regenerative operation in response to the engine being switched to the load operation (a point in time t8). When the regenerative operation is ended, the ECU 80 switches the air dryer 11 to the purging operation. This lowers the air pressure of the air tank 13 in response to the consumption of compressed air, for example, in the brake chamber 15 (after the point in time t8).

With reference to Figs. 5 to 11, various determination processes executed will be described. The ECU 80 executes these determination processes to perform the regenerative operation.

As shown in Fig. 5, the ECU 80 repeatedly executes the determination processes of the regenerative operation at predetermined intervals. The determination processes of the regenerative operation include an operation determination process (step S10), a suitability determination process (step S11), a signal determination process (step S12), a request determination process (step S13), and a performance determination process (step S14), which are executed sequentially.

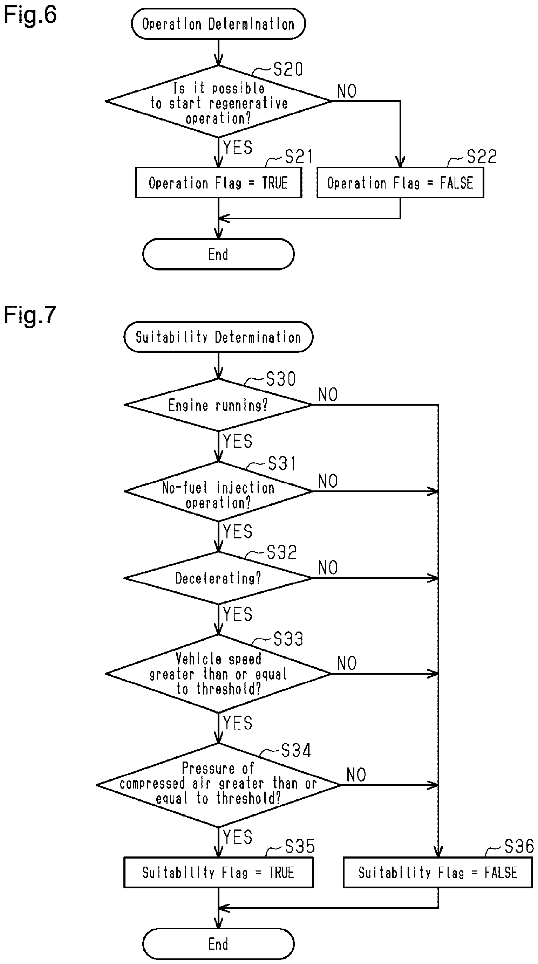

As shown in Fig. 6, the ECU 80 determines whether the regenerative operation can be performed in the operation determination process (step S10 in Fig. 5). That is, the ECU 80 determines whether it is possible to start the regenerative operation (step S20 in Fig. 6). For example, the ECU 80 determines that the regenerative operation is possible when the vehicle is traveling (the vehicle speed is greater than 0), the air pressure is greater than the supply start value Cl, and the air dryer 11 is not in the supplying operation. In contrast, the ECU 80 determines that the regenerative operation is not possible when the vehicle is in a stopped state (the vehicle speed is 0), the air pressure is greater than or equal to the regeneration threshold Cth, and/or the air dryer 11 is performing the supplying operation. When determining that the regenerative operation is possible (YES in step S20 of Fig. 6), the ECU 80 sets an operation flag to TRUE (step S21 of Fig. 6) and ends the operation determination process. In contrast, when determining that the regenerative operation is not possible (NO in step S20 of Fig. 6), the ECU 80 sets the operation flag to FALSE (step S22 of Fig. 6) and ends the operation determination process.

As shown in Fig. 7, the ECU 80 determines whether the situation is suitable for the regenerative operation in the suitability determination process (step S11 of Fig. 5). In the suitability determination process, the ECU 80 determines whether the engine is running (step S30 of Fig. 7). For example, the ECU 80 determines that the engine is running based on a signal obtained from the vehicle ECU 100. Specifically, the ECU 80 determines that the engine is running based on a signal indicating that the vehicle is traveling or a signal indicating that the vehicle is temporarily stopped. In contrast, the ECU 80 determines that the engine is not running based on a signal indicating that the vehicle is parked.

Also, the ECU 80 determines whether the engine is performing the no-fuel injection operation (step S31). For example, the ECU 80 determines whether a first condition and a second condition, which are described below, are satisfied based on signals from the vehicle ECU 100. When at least one of the first condition or the second condition is satisfied, the ECU 80 determines that the engine is performing the no-fuel injection operation. The first condition is related to the fuel injection amount, and includes that the shift operating state is an unoperated state, that the fuel injection amount is less than or equal to an injection amount threshold, and that the engine rotation speed is greater than or equal to a rotation speed threshold. The second condition is not related to the fuel injection amount and includes that the shift operating state is an unoperated state, that the accelerator pedal depression amount is less than or equal to a pedal depression amount threshold, that the engine torque output is less than or equal to a torque output threshold, and that the engine rotation speed is greater than or equal to the rotation speed threshold. The rotation speed threshold is used to detect the vehicle traveling state and is, for example, 700 rpm. The pedal depression amount threshold is used to detect the no-load state of the engine and is, for example, 0%. The torque output threshold is used to detect the no-load state of the engine and is, for example, 0 Nm.

Also, the ECU 80 determines whether the vehicle (speed) is decelerating (vehicle speed is decreasing) (step S32). For example, based on signals from the vehicle ECU 100, the ECU 80 determines that the vehicle speed is decreasing when the exhaust brake output is greater than an exhaust brake output threshold, and/or the retarder brake output is greater than a retarder brake output threshold. The exhaust brake output threshold is used to detect the brake operation state and has a value with which an intentional brake operation can be detected. The exhaust brake output threshold is set to 1 to 2%. The retarder brake output threshold is used to detect the brake operation state and has a value with which an intentional brake operation can be detected. The retarder brake output threshold is set to 1 to 2%.

Also, the ECU 80 determines whether the vehicle speed is greater than or equal to a regenerative operation permitting speed threshold (step S33). For example, the ECU 80 determines whether the vehicle speed is greater than or equal to the regenerative operation permitting speed threshold based on a comparison between the value corresponding to a signal from the vehicle ECU 100 and the regenerative operation permitting speed threshold. The regenerative operation permitting speed threshold is used to detect the vehicle traveling state and is, for example, 5 km/h.

Also, the ECU 80 determines whether the air pressure of compressed air is greater than or equal to a regenerative operation suitable pressure threshold (step S34). For example, the ECU 80 determines whether the air pressure of compressed air is greater than or equal to the regenerative operation suitable pressure threshold based on a comparison between the detected air pressure of the pressure sensor 65 and the regenerative operation suitable pressure threshold. The regenerative operation suitable pressure threshold is the value of the pressure required to continue the regenerative operation for a predetermined minimum time of the regenerative supply. The regenerative operation suitable pressure threshold is, for example, greater than the supply start value CI and less than the regenerative threshold Cth. When all the conditions of steps S30 to S34 are satisfied (YES in step S34), the ECU 80 sets a suitability flag to TRUE (step S35) and ends the suitability determination process. In contrast, when determining that any one of the five steps S30 to S34 is not satisfied (NO in any of steps S30 to S34), the ECU 80 sets the suitability flag to FALSE (step S36) and ends the suitability determination process.

The suitability determination process may be a process based on one or more of the determinations of steps S31 to S34 of Fig. 7.

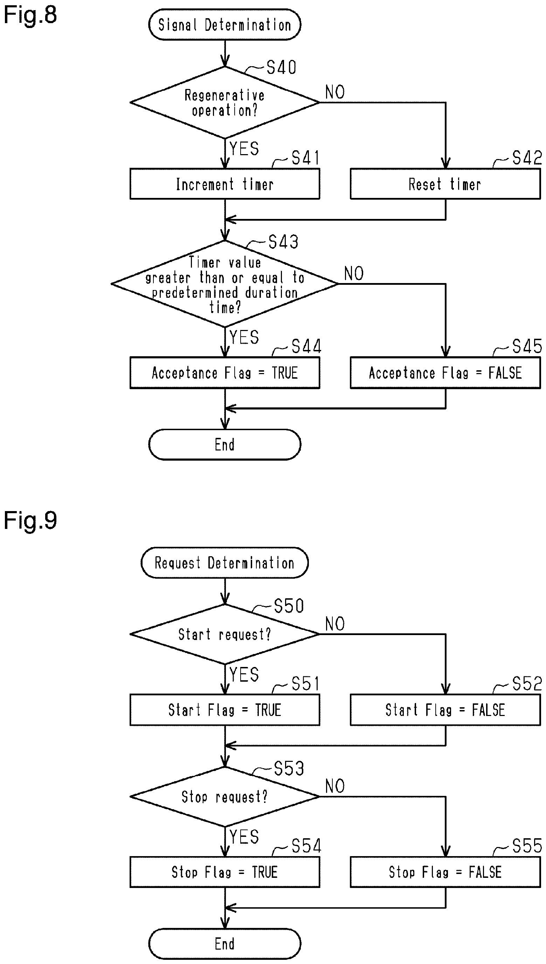

As shown in Fig. 8, the ECU 80 performs setting based on signals related to the regenerative operation in the signal determination process (step S12 of Fig. 5). The ECU 80 determines whether the regenerative operation is being performed (step S40 of Fig. 8). When determining that the regenerative operation is being performed (YES in step S40), the ECU 80 increments a regenerative supply continuation timer (step S41). When determining that the regenerative operation is not being performed (NO in step S40), the ECU 80 resets the regenerative supply continuation timer (step S42).

Also, the ECU 80 determines whether the regenerative supply continuation timer has a value greater than or equal to a predetermined duration time (step S43). The predetermined duration time is a duration time of the regenerative supplying operation, and is set to, for example, 10 seconds. When determining that the value of the regenerative supply continuation timer is greater than or equal to the predetermined duration time (YES in step S43), the ECU 80 sets an acceptance flag to TRUE (step S44) and ends the signal determination process. In contrast, when determining that the value of the regenerative supply continuation timer is not greater than or equal to the predetermined duration time (NO in step S43), the ECU 80 sets the acceptance flag to FALSE (step S45) and ends the signal determination process.

In the request determination process (step S13 of Fig. 5), the ECU 80 sets a start flag related to a start request determination of the regenerative operation as shown in Fig. 9. The ECU 80 determines whether there is a start request for the regenerative operation (step S50 of Fig. 9). For example, the ECU 80 determines that there is a start request when a condition is satisfied that includes that the detected air pressure of the pressure sensor 65 is less than the supply stop value CO, that the acceptance flag is TRUE, and that the suitability flag is TRUE. When there is a start request (YES in step S50), the ECU 80 sets the start flag to TRUE (step S51). When there is no start request (NO in step S50), the ECU 80 sets the start flag to FALSE (step S52).

Also, the ECU 80 determines whether there is a stop request (step S53). For example, the ECU 80 determines that there is a stop request when the start flag is FALSE and the operation flag is FALSE. When determining that there is a stop request (YES in step S53), the ECU 80 sets a stop flag to TRUE (step S54) and ends the request determination process. In contrast, when determining that there is no stop request (NO in step S53), the ECU 80 sets the stop flag to FALSE (step S55) and ends the request determination process.

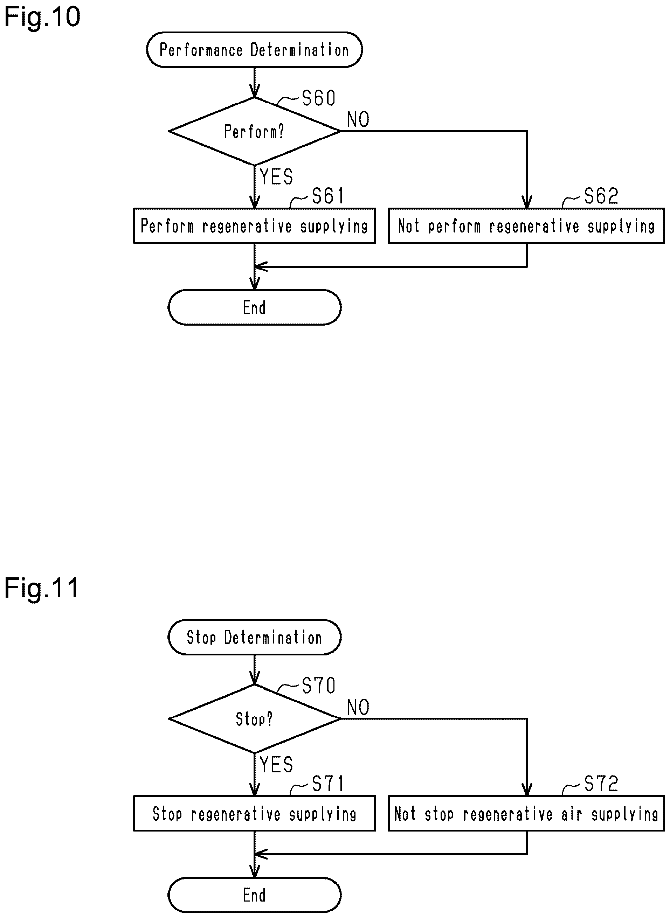

When the regenerative supplying operation has not been performed, the ECU 80 determines whether to perform the regenerative supplying operation (step S60) in the performance determination process (step S14 of Fig. 5) as shown in Fig. 10. For example, the ECU 80 determines to perform the regenerative supplying operation when the detected air pressure of the pressure sensor 65 is less than or equal to the supply start value Cl, and/or the start flag is TRUE. When determining to perform the regenerative supplying operation (YES in step S60), the ECU 80 performs the regenerative supplying operation (step S61) and ends the performance determination process. In contrast, when determining not to perform the regenerative supplying operation (NO in step S60), the ECU 80 does not perform the regenerative supplying operation (step S62) and ends the performance determination process.

When the regenerative supplying operation is being performed, the ECU 80 performs a stop determination process as shown in Fig. 11. In the stop determination process, the ECU 80 determines whether to stop the regenerative supply (step S70). The ECU 80 determines to stop the regenerative supply when the detected air pressure of the pressure sensor 65 is less than the supply stop value CO, and the stop flag is TRUE. When determining to stop the regenerative supply (YES in step S70), the ECU 80 stops the regenerative supply (step S71) and ends the stop determination process. In contrast, when determining not to stop the regenerative supply (NO in step S70), the ECU 80 does not stop the regenerative supply (step S72 of Fig. 11) and ends the stop determination process.

As described above, the present embodiment has the following advantages.
(1) During a no-load operation, in which, for example, the vehicle is decelerating and the engine is rotated by rotation of vehicle wheels, the regenerative supply is performed, in which the compressor 4 is driven by rotation of the engine to supply compressed air. The regenerative supply is performed prior to supply of compressed air through a normal supplying operation, so as to supplement the supply of compressed air through the normal supplying operation. During the regenerative supply, the engine does not consume fuel to drive the compressor 4. This improves the fuel economy of the engine.
(2) Rotation of the engine is used to supply air effectively during a no-fuel injection operation of the engine.
(3) The regenerative supply is continued more than 10 seconds. Thus, when the compressor 4 is switched from a no-load operation to a load operation, there is no period during which compressed air fails to be supplied due to a delay in the supply of compressed air.
(4) Since the regenerative supply is performed on condition that the detected air pressure is less than or equal to the regenerative threshold Cth, the detected air pressure is prevented from reaching the supply stop value CO during the regenerative supply.
(5) It is possible to acquire information indicating that the engine is performing a no-load operation from the controller for the vehicle.

The above-described embodiment may be modified as follows. The above-described embodiment and the following modifications can be combined as long as the combined modifications remain technically consistent with each other.

The air tank 13 may supply compressed air to devices that consume compressed air other than the brake valve 14, for example, to a parking brake.

The pressure sensor 65 may detect the air pressure at any position that is downstream of the check valve 19 as long as the pressure sensor 65 can detect an air pressure that corresponds to the air pressure of the air tank 13. For example, the pressure sensor may detect the air pressure in the air tank. In this case, the supplying operation, the non-supplying operation, the regenerating operation, and the regenerative operation may be controlled based on the detected air pressure in the air tank.

In the above-described embodiment, the filter 17 includes both the desiccant and the filtering unit. However, the filter 17 may include only one of these.

Although the above-described embodiment describes a case in which the filter 17 is provided, an oil mist separator may be provided on the upstream side of the filter 17.

The oil mist separator includes a filter that performs gas/liquid separation through collision with compressed air, thereby trapping oil contained in the compressed air delivered from the compressor 4. The filter may be formed by stamping metal. Alternatively, the filter may be made of porous material such as sponge. The oil mist separator further improves the cleaning performance for compressed air.

A configuration may be employed that does not start the regenerative supply during the regenerating operation. This configuration prevents the regenerating operation from being rendered useless because of the operation of the regenerative supply. Also, the regenerative supply is not rendered useless because of the regenerating operation.

A configuration may be employed that does not start the regenerating operation during the regenerative supply. For example, even if the air pressure reaches the supply stop value CO during a period in which the regenerative supply is performed for a predetermined amount of time, the regenerating operation may be started only after the end of the predetermined amount of time. This configuration prevents the regenerative supply from being rendered useless because of the regenerating operation. The regeneration performance is not reduced due to interruption of the regenerating operation by the regenerative supply.

In the above-described embodiment, the air supply system 10 is described as a system employed in an automobile such as a truck, a bus, or a construction machine. Alternatively, the air supply system may be mounted on other vehicles such as passenger cars, railway vehicles, or the like.

### DESCRIPTION OF THE REFERENCE NUMERALS

4...Compressor; 10...Air Supply System; 11...Air Dryer; 11A...Internal Space; 12...Protective Valve; 13...Air Tank; 14...Brake Valve; 4E, 11E, 12E, 13E, 14E...Air Supply Paths; 15...Brake Chamber; 16...Branch Passage; 17...Filter; 18...Air Supply Passage; 19...Check Valve; 20...Bypass Passage; 21...Regeneration Control Valve; 22...Orifice; 25...Drain Valve; 26...Governor; 27...Drain Port; 65...Pressure Sensor; 66...Temperature-Humidity Sensor; 80...ECU; 100...Vehicle ECU; E62, E63, E65, E66...Wires; P12...Maintenance Port

## Claims

1. An air supply system (10) that performs a supplying operation that causes compressed air supplied from a compressor (4) to flow from an upstream side to a downstream side via an air dryer (11) including a filter (17) and a check valve (19), the air supply system comprising:
a pressure sensor that detects an air pressure on a downstream side of the check valve (19); and
a controller (80) that switches between the supplying operation and a non-supplying operation, and performs a regenerating operation, which regenerates the filter (17), during the non-supplying operation,
**characterised in that** the controller (80) stores:
a supply start value, the supplying operation being started based on a comparison between the supply start value and a detected air pressure detected by the pressure sensor, and
a supply stop value, which is greater than the supply start value,
the non-supplying operation being started based on a comparison between the supply stop value and the detected air pressure, and
wherein the controller (80) performs the supplying operation by a regenerative supply when a condition is satisfied, the condition including:
that the regenerating operation is not being performed;
that the detected air pressure is greater than the supply start value and less than the supply stop value; and
that an engine that drives the compressor (4) is performing a no-load operation.

2. The air supply system according to claim 1, wherein the no-load operation of the engine includes a state in which the engine is performing a no-fuel injection operation.

3. The air supply system according to claim 1 or 2, wherein the controller (80) continues the regenerative supply for 10 seconds or longer.

4. The air supply system according to any one of claims 1 to 3, wherein the condition further includes that the detected air pressure is less than or equal to a predetermined air pressure.

5. The air supply system according to any one of claims 1 to 4, wherein the controller (80) does not start the regenerative supply while the regenerating operation is being performed.

6. The air supply system according to any one of claims 1 to 5, wherein the controller (80) acquires information indicating that the engine is performing the no-load operation from a controller (100) for a vehicle.

## Patentansprüche

1. Luftzufuhrsystem (10), das einen Zuführbetrieb durchführt, der veranlasst, dass von einem Kompressor (4) zugeführte komprimierte Luft von einer stromaufwärts gelegenen Seite zu einer stromabwärts gelegenen Seite über einen Lufttrockner (11), der ein Filter (17) und ein Rückschlagventil (19) enthält, fließt, wobei das Luftzufuhrsystem umfasst:
einen Drucksensor, der einen Luftdruck auf einer stromabwärts gelegenen Seite des Rückschlagventils (19) erfasst, und
eine Steuereinrichtung (80), die zwischen dem Zuführbetrieb und einem nicht-Zuführbetrieb schaltet und einen Regenerierungsbetrieb durchführt, der das Filter (17) während des nicht-Zuführbetriebs regeneriert,
**dadurch gekennzeichnet, dass** die Steuereinrichtung (80) speichert:
einen Zuführstartwert, wobei der Zuführbetrieb basierend auf einem Vergleich zwischen dem Zuführstartwert und einem durch den Drucksensor erfassten Luftdruck gestartet wird, und
einen Zuführstoppwert, der größer als der Zuführstartwert ist, wobei der nicht-Zuführbetrieb basierend auf einem Vergleich zwischen dem Zuführstoppwert und dem erfassten Luftdruck gestartet wird, und
wobei die Steuereinrichtung (80) den Zuführbetrieb mit einer regenerativen Zufuhr durchführt, wenn eine Bedingung erfüllt wird, wobei die Bedingung umfasst:
dass der Regenerierungsbetrieb nicht durchgeführt wird,
dass der erfasste Luftdruck größer als der Zuführstartwert und kleiner als der Zuführstoppwert ist, und
dass ein Motor, der den Kompressor (4) antreibt, einen nicht-Lastbetrieb durchführt.

2. Luftzufuhrsystem nach Anspruch 1, wobei der nicht-Lastbetrieb des Motors einen Zustand umfasst, in dem der Motor einen nicht-Kraftstoffeinspritzbetrieb durchführt.

3. Luftzufuhrsystem nach Anspruch 1 oder 2, wobei die Steuereinrichtung (80) die regenerative Zufuhr für 10 Sekunden oder länger fortsetzt.

4. Luftzufuhrsystem nach einem der Ansprüche 1 bis 3, wobei die Bedingung weiterhin umfasst, dass der erfasste Luftdruck kleiner als oder gleich einem vorbestimmten Luftdruck ist.

5. Luftzufuhrsystem nach einem der Ansprüche 1 bis 4, wobei die Steuereinrichtung (80) die regenerative Zufuhr nicht startet, während der Regenerierungsbetrieb durchgeführt wird.

6. Luftzufuhrsystem nach einem der Ansprüche 1 bis 5, wobei die Steuereinrichtung (80) Informationen, die angeben, dass der Motor den nicht-Lastbetrieb durchführt, von einer Steuereinrichtung (100) für ein Fahrzeug erhält.

## Revendications

1. Système d'alimentation en air (10) qui effectue une opération d'alimentation qui fait que l'air comprimé fourni par un compresseur (4) s'écoule d'un côté amont à un côté aval à travers un sécheur d'air (11) comprenant un filtre (17) et un clapet anti-retour (19), le système d'alimentation en air comprenant :
un capteur de pression qui détecte une pression d'air sur le côté aval du clapet anti-retour (19) ; et
un dispositif de commande (80) qui commute entre l'opération d'alimentation et une opération de non-alimentation, et effectue une opération de régénération, qui régénère le filtre (17), pendant l'opération de non-alimentation,
**caractérisé par le fait que** le dispositif de commande (80) mémorise :
une valeur de démarrage de l'alimentation, l'opération d'alimentation étant lancée sur la base d'une comparaison entre la valeur de démarrage de l'alimentation et une pression d'air détectée par le capteur de pression, et
une valeur d'arrêt de l'alimentation, qui est supérieure à la valeur de départ de l'alimentation, l'opération de non-alimentation étant lancée sur la base d'une comparaison entre la valeur d'arrêt de l'alimentation et la pression d'air détectée, et
dans lequel le dispositif de commande (80) effectue l'opération d'alimentation par une alimentation régénérative lorsqu'une condition est remplie, la condition comprenant les opérations suivantes :
l'opération de régénération n'est pas en cours ;
la pression d'air détectée est supérieure à la valeur de démarrage de l'alimentation et inférieure à la valeur d'arrêt de l'alimentation ; et
le moteur qui entraîne le compresseur (4) fonctionne à vide.

2. Système d'alimentation en air selon la revendication 1, dans lequel le fonctionnement à vide du moteur comprend un état dans lequel le moteur effectue une opération sans injection de carburant.

3. Système d'alimentation en air selon les revendications 1 ou 2, dans lequel le dispositif de commande (80) continue l'alimentation régénérative pendant 10 secondes ou plus.

4. Système d'alimentation en air selon l'une des revendications 1 à 3, dans lequel la condition comprend en outre que la pression d'air détectée est inférieure ou égale à une pression d'air prédéterminée.

5. Système d'alimentation en air selon l'une des revendications 1 à 4, dans lequel le dispositif de commande (80) ne démarre pas l'alimentation régénérative pendant que l'opération de régénération est en cours.

6. Système d'alimentation en air selon l'une des revendications 1 à 5, dans lequel le dispositif de commande (80) acquiert des informations indiquant que le moteur effectue l'opération à vide à partir d'un dispositif de commande (100) pour un véhicule.
